(19) Europäisches Patentamt
European Patent Office
Office européen des brevets

(11) **EP 1 031 624 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**23.11.2011   Patentblatt 2011/47**

(51) Int Cl.:
*C12G 3/06* *(2006.01)*

(45) Hinweis auf die Patenterteilung:
**26.10.2005   Patentblatt 2005/43**

(21) Anmeldenummer: **00103403.2**

(22) Anmeldetag: **24.02.2000**

(54) **Alkoholisches Getränk**

Alcoholic beverage

Boisson alcoolisée

(84) Benannte Vertragsstaaten:
**AT BE CH CY DE DK ES FI FR GB GR IE IT LI LU MC NL PT SE**

(30) Priorität: **24.02.1999   DE 19907955**

(43) Veröffentlichungstag der Anmeldung:
**30.08.2000   Patentblatt 2000/35**

(73) Patentinhaber: **Echter Nordhäuser Spirituosen GmbH**
**99734 Nordhausen (DE)**

(72) Erfinder:
• **Habersam, Helmut**
**55268 Nieder-Olm (DE)**

• **Simson, Ingrid**
**55122 Mainz (DE)**

(74) Vertreter: **Best, Michael et al**
**Lederer & Keller**
**Patentanwälte**
**Unsöldstrasse 2**
**80538 München (DE)**

(56) Entgegenhaltungen:
EP-A- 0 480 669      EP-A- 0 807 680
WO-A-98/04158      DE-A- 3 000 916
DE-A- 3 833 937      DE-A- 19 930 074
FR-A- 2 724 177      FR-A- 2 724 178
US-A- 3 843 809      US-A- 4 001 458

Printed by Jouve, 75001 PARIS (FR)

## Beschreibung

Die vorliegende Erfindung betrifft ein alkoholisches Getränk, insbesondere eine Spirituose, die eine Alternative zu vergleichbaren herkömmlichen Produktkategorien darstellt.

Spirituosen sind nach den Begriffsbestimmungen der Europäischen Spirituosenverordnung alkoholische Flüssigkeiten, die zum menschlichen Verbrauch bestimmt sind, besondere organoleptische Eigenschaften und einen Mindestalkoholgehalt von 15% vol aufweisen. Zu den bekanntesten Vertretern zählen Brände wie Weinbrand, Getreidebrand und Obstbrand, wobei letztere sich steigender Beliebtheit erfreuen. Bei den Obstbränden handelt es sich um Produkte, die nach Vergären der aus frischen Früchten bereiteten Maische und anschließender Destillation aus den so erhaltenen Mosten der namengebenden Rohstoffe hergestellt werden und deren organoleptische Eigenschaften ausschließlich oder überwiegend aus dem Destillat stammen. Zu den Obstbränden und sogenannten Obstgeisten zählen auch die Erzeugnisse, die dadurch erhalten werden, daß nichtgegorene oder nur angegorene Früchte mit Alkohol überzogen und anschließend destilliert werden. In diesem Fall ist ein bestimmter Fruchtanteil und die Art des zu verwendenden Alkohols gesetzlich vorgeschrieben. Der Alkoholgehalt von Obstbränden beträgt mindesten 37,5% vol, qualitativ hochwertige Produkte weisen in der Regel einen Alkoholgehalt von mindestens 40% vol auf; die Mindestalkoholgehalte von Weinbrand und Korn betragen 36% vol bzw. 32% vol.

Die Qualität eines Brandes wird vor allem von der Beschaffenheit der Rohware, dem Gärverlauf, der Destillationsführung - insbesondere der ausreichenden Vor- und Nachlaufabscheidung - sowie der Lagerung bestimmt. Die Kosten, die für die Herstellung qualitativ hochwertiger Produkte aufzuwenden sind, sind daher in der Regel erheblich.

Große Bedeutung haben ebenfalls Spirituosen, die durch Mischen einer oder mehrerer Spirituosen mit weiteren Zutaten erhalten werden. Zu dieser Kategorie zählt auch die große Gruppe der Liköre. Zur Herstellung von Likören werden z.B. Neutralalkohol, d.h. ein mittels fraktionierter Destillation unter Abscheidung von Vor- und Nachlauf gereinigter Alkohol und/oder Spirituosen, wie Korn, Wodka, Weinbrand, Whisky oder Obstbrand verwendet. In Abhängigkeit von der gewünschten Geschmacksrichtung werden dieser einzeln oder in Mischung vorliegenden alkoholischen Komponente neben Zucker weitere Zutaten wie z.B. Fruchtsäfte, Fruchtsäuren, Aromastoffe bzw. Aromaextrakte, Rahm, Milch oder andere Milcherzeugnisse, Eigelb usw. beigemischt. Der Mindestalkoholgehalt von Likören beträgt - ausgenommen Eierlikör - 15% vol, üblicherweise bewegt er sich zwischen 15 und etwa 30% vol. Bis auf wenige Ausnahmen beträgt der Zuckergehalt von Likören mindestens 100 g/l; in der Regel weisen Liköre jedoch einen wesentlich höheren Zuckergehalt auf. Viele Liköre enthalten neben einem relativ hohen Zuckergehalt auch Fruchtsäfte, Fruchtmark und/oder Fruchtsäuren, um den Getränken mehr Fülle zu verleihen.

Die DE 42 30 391 C1 beschreibt ein vorzugsweise als Aperitif oder Digestiv zu verwendendes alkoholisches Getränk, das durch Mischen von 1 bis 1,5 Teilen Anisbranntwein und 1 bis 1,5 Teilen Likörwein hergestellt wird.

Die DE 43 31 437 A1 beschreibt eine Komposition zur Herstellung alkoholischer Getränke mit weinbrandähnlichem Geschmack und einem Alkoholgehalt von 20 bis 40% vol, die durch Mischen von 400 bis 1200 Volumenteilen kupferblasenfrischem Weindestillat, 6 bis 14 Volumenteilen eines oder mehrerer Rumdestillate sowie 5 bis 15 Volumenteilen natürlichem Brandy-Aroma erhalten wird.

Die DE 44 10 755 A1 beschreibt eine Mischung aus Wodka mit einer Wasser-Primasprit-Flüssigkeit und einem Nahrungsmittelzusatz, dadurch gekennzeichnet, daß als Nahrungsmittelzusatz aromatischer Alkohol von getrockneten Weinbeeren enthalten ist.

Die DE 196 19 370 A1 beschreibt ein likörartiges Getränk auf der Grundlage von Wasser, Alkohol und Zucker, dadurch gekennzeichnet, daß es als Aromabestandteil einen wäßrigalkoholischen Extrakt aus getrockneten Hopfendolden enthält.

Die DE 196 50 018 A1 beschreibt ein alkoholhaltiges wäßriges Getränk und Verfahren zu seiner Herstellung. Das Getränk enthält Inhaltsstoffe von Hanfpflanzen, insbesonder von Blüten, Blütenteilen, Pellets, Blütenextrakten und/oder Blütendestillaten.

Die DE 197 29 030 A1 beschreibt einen Rum-Punsch mit 20-25% vol Rum, 5-10% vol Fruchtlikör, ca. 3% vol Grenadine, ca. 3% vol Zitronensaft (optional), 15-25% vol Fruchtnektar, der Rest ist Orangennektar.

Das in der EP 0 807 680 beschriebene Getränk aus Wasser, Invertzuckersirup, 1,25 mL/L einer aus Aprikosen-, Orangen-, Bittermandel-, Ingwer- und Vanillearomen bestehenden Aromamischung sowie gereiftem Weindestillat, das 36% vol Alkohol und 3% (Gew./Vol.) Gesamtzucker enthält (siehe Bsp. 1B), ist von der Erfindung ausgenommen.

Nach dem Stand der Technik sind bisher jedoch keine Spirituosen bekannt, die in ihrer sensorischen Beschaffenheit eine qualitativ hochwertige Alternative zu herkömmlichen Bränden darstellen. Insbesondere die an sich wünschenswerte Verminderung des Alkoholgehalts in solchen Getränken führt zu einer Beeinträchtigung der Fülle.

Eine Aufgabe der vorliegenden Erfindung ist daher die Bereitstellung eines Getränks, das in seinen organoleptischen Eigenschaften konventionellen Getränken vom Typ Brand gleichwertig oder sogar höherwertig ist. Insbesondere soll das Getränk bei relativ geringem Alkoholgehalt Fülle und Harmonie aufweisen.

Eine weitere Aufgabe ist die Bereitstellung eines Getränks, das in seiner organoleptischen Beschaffenheit eine qualitativ hochwertige Alternative zu herkömmlichen Bränden darstellt, jedoch wirtschaftlich günstiger, d.h. preiswerter ist.

Überraschend wurde nun gefunden, daß die vorstehenden Aufgaben durch ein alkoholisches Getränk gelöst werden, bei dem der Alkohol- und Zuckergehalt in einem definierten Harmoniebereich korrelieren, das eine ausgewogene Mischung von Aromakomponenten mit Gärungscharakter und fruchtig-blumigen und/oder fruchtig-würzigen Aromakomponenten, jedoch keine säuerlich schmeckenden Zutaten enthält.

Die vorliegende Erfindung betrifft somit ein alkoholisches Getränk, das mindestens eine alkoholische Komponente, Zucker und Aromakomponenten, jedoch keine säuerlich schmeckenden Zutaten umfaßt, dadurch gekennzeichnet, daß der Alkoholgehalt im Bereich von 25-32% vol und der Zuckergehalt im Bereich von 25-60 g/l jeweils bezogen auf das gesamte alkoholische Getränk liegt und die Aromakomponenten eine Mischung von Aromakomponenten mit Gärungscharakter und fruchtig-blumigen und/oder fruchtig-würzigen Aromakomponenten umfassen.

Das erfindungsgemäße Getränk weist durch seinen speziellen harmonischen Alkohol- und Zuckergehalt im Zusammenspiel mit bestimmten Aromakomponenten, die sowohl einen Gärungscharakter als auch einen fruchtig-blumigen und/oder fruchtig-würzigen Charakter aufweisen, einen insgesamt harmonischen und vollen organoleptischen Eindruck auf und stellt somit eine gleich- oder höherwertige Alternative zu herkömmlichen Produkten vom Typ Brand dar.

Besonders gute organoleptische Eigenschaften des Getränks werden bei einem Alkoholgehalt im Bereich von 26-32% vol und insbesondere im Bereich von 28-32% vol erreicht. Der Zuckergehalt des Getränks liegt bevorzugt im Bereich von 30-50 g/l und besonders bevorzugt im Bereich von 30-45 g/l.

Desweiteren wurde festgestellt, daß sich Getränke mit besonders guten organoleptischen Eigenschaften erhalten lassen, wenn der Zuckergehalt bei vorgegebenem, gewünschten Alkoholgehalt des Getränks nicht in dem gesamten obengenannten Bereich variiert wird, sondern größer oder gleich einem Wert H1 und kleiner oder gleich einem Wert H2 ist, wobei sich H1 und H2 nach den folgenden Formeln berechnen:

$$H1 = 111{,}5 - 3{,}14 * \text{Alkoholgehalt}$$

$$H2 = 147{,}1 - 2{,}88 * \text{Alkoholgehalt.}$$

In die beiden genannten Formeln wird zur Bestimmung des besonders bevorzugten Bereichs des Zuckergehalts in g/l jeweils der Betrag des Alkoholgehalts in % vol eingesetzt.

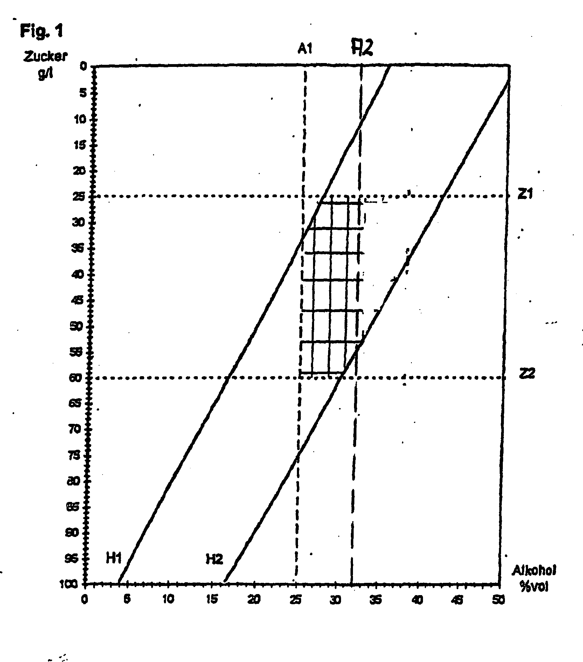

Der besonders bevorzugte Harmoniebereich für den Alkohol- und Zuckergehalt in dem erfindungsgemäßen Getränk ist in Figur 1 dargestellt. Figur 1 zeigt ein Diagramm, in dem der Zuckergehalt in g/l gegen den Alkoholgehalt in % vol aufgetragen ist. Der Mindest- und Höchstgehalt an Alkohol ist durch die Linien A1 und A2 dargestellt, der Mindest- und Höchstgehalt an Zucker durch die Linien Z1 und Z2. Der erfindungsgemäß besonders bevorzugte Harmoniebereich wird dabei zusätzlich durch die Linien H1 und H2 begrenzt und ist in Figur 1 als schraffierte Fläche dargestellt.

Das erfindungsgemäße alkoholische Getränk enthält mindestens eine alkoholische Komponente, die ein oder mehrere Destillate und/oder daraus hergestellte Brände umfaßt. Eine Mitverwendung sonstiger Alkoholkomponenten und insbesondere von sogenanntem Neutralalkohol ist ebenfalls möglich.

Destillate im Sinne der vorliegenden Erfindung sind alkoholische Flüssigkeiten, die durch Vergären landwirtschaftlicher Rohstoffe und nachfolgender Destillation gewonnen werden, einer definierten Spirituosenkategorie zugeordnet werden können und vorzugsweise ein von den verwendeten Rohstoffen stammendes typisches, reines Aroma aufweisen. Geeignet sind insbesondere Destillate aus Kernobst, Steinobst, Beerenobst, Weißwein, Rotwein, Fruchtwein, Getreide oder Kartoffeln. Ebenfalls geeignet sind Destillate aus anderen pflanzlichen Rohstoffen wie Trester aus Trauben, Äpfeln oder Birnen, Enzianwurzeln oder Topinambur. Kern-, Stein- und Beerenobstdestillate können beispielsweise aus Birnen, Äpfeln, Quitten, Zwetschen, Kirschen, Pfirsichen, Aprikosen, Himbeeren, Brombeeren, roten und/oder weißen Weintrauben hergestellt sein. Als Getreidedestillate eignen sich beispielsweise Roggen- oder Weizenfeindestillate. Beispielsweise eignen sich als alkoholische Komponente Kirschbrand, Williamschrist-Birnendestillat, Williamschrist-Birnenbrand, Pfirsichbrand, Aprikosenbrand, Himbeerbrand, Brand aus weißen und/oder roten Weintrauben, Weißweindestillat, Rotweindestillat, oder Mischungen aus Weißwein- und Rotweindestillat, Apfelbrand, Zwetschenbrand, Himbeergeist, Roggenfeindestillat, Roggenbrand, Wodka, Weizenfeindestillat, Roggenkorn und Kornbrand sowie gegebenenfalls Neutralalkohol.

Anstelle der Destillate können auch die daraus hergestellten Brände eingesetzt werden, die dadurch erhalten werden, daß die Destillate mit Wasser und gegebenenfalls weiteren Zutaten auf Trinkstärke herabgesetzt werden.

Als alkoholische Komponente wird vorzugsweise ein gelagertes Destillat oder gelagerter Brand eingesetzt.

Wenn in dem erfindungsgemäßen alkoholischen Getränk die Aromakomponente mit Gärungscharakter aus dem Destillat und/oder Brand stammt, sollte das Getränk Destillate und/oder Brände in einer Menge enthalten, daß mindesten 25% des Gesamtalkoholgehaltes des fertigen Getränks aus dem verwendeten Destillat und/oder Brand stammt. Hierdurch wird sichergestellt, daß die Aromakomponente mit Gärungscharakter in ausreichender Menge in dem erfindungsgemäßen Getränk vorhanden ist, um diesem eine mindestens gleichwertige organoleptische Qualität zu herkömmlichen vergleichbaren Getränken wie vergleichbaren Spirituosen zu verleihen. Vorzugsweise wird der Destillat- und/oder Brandanteil so gewählt, daß mindestens 40% des Gesamtalkoholgehaltes und insbesondere mindestens 50% des Gesamtalkoholgehaltes des fertigen Getränks aus diesem stammen.

Die spezielle Zusammensetzung des erfindungsgemäßen Getränks ermöglicht es, als alkoholische Komponente eine Mischung aus einem Destillat und/oder Brand aus Obst bzw. Wein und einem Getreidedestillat/-brand oder Neutralalkohol einzusetzen, ohne daß die vorteilhaften organoleptischen Eigenschaften des Destillats und/oder Brands aus Obst, Wein bzw. anderen pflanzlichen Rohstoffen verlorengehen. Durch das Zumischen des zumeist preiswerteren Getreidedestillats/-brands oder Neutralalkohols wird ein im Vergleich zu herkömmlichen Obst-und Weindestillaten preiswerteres Produkt erhalten, das trotzdem eine hohe organoleptische Qualität aufweist. Außerdem kann das erfindungsgemäße Getränk aufgrund seines relativ geringen Alkoholgehalts preiswerter als herkömmliche Obst- und Weindestillate angeboten werden.

Als Süßungsmittel eignen sich beispielsweise Rohr- oder Rübenzucker, flüssiger Zucker, Invertzuckersirup, karamelisierter Zucker, Honig oder andere natürliche Zuckerstoffe. Die Süßungsmittel können in fester oder flüssiger Form als Lösung oder Sirup zugegeben werden. Die Süßungsmittel können einzeln oder in Mischung verwendet werden.

Als weiteren wesentlichen Bestandteil enthält das erfindungsgemäße Getränk eine Mischung von Aromakomponenten mit Gärungscharakter und fruchtig-blumigen und/oder fruchtig-würzigen Armomakomponenten. Bevorzugt handelt es sich bei den Aromakomponenten um natürliche Aromakomponenten, es können jedoch auch naturidentische oder künstliche Aromakomponenten eingesetzt werden.

Bevorzugt setzt sich die Mischung von Aromakomponenten aus den aus dem Destillat und/oder Brand stammenden Aromen und einer zusätzlich zugesetzten Aromakomposition zusammen. Die zugesetzte Aromakomposition kann natürliche Aromastoffe umfassen, bei denen es sich um chemisch definierte Stoffe mit Aromaeigenschaften handelt, die durch geeignete, insbesondere physikalische Verfahren aus Ausgangsstoffen pflanzlicher Herkunft aufbereitet sind. Art und Höhe der zugesetzten Aromakomposition sollten so gewählt werden, daß in Kombination mit den aus der alkoholischen Komponente stammenden Aromabestandteilen eine reintönige und ausgewogene Mischung aus Aromakomponenten mit Gärungscharakter und solchen mit überwiegend fruchtig-blumiger und/oder fruchtig-würziger Note gebildet wird. Der Erhalt einer solchen gewünschten Mischung kann im Einzelfall vom Fachmann empirisch bestimmt werden, wobei das erhaltene Getränk beispielsweise einem organoleptischen Test unterzogen wird. Das genaue Verhältnis der Aromakomponenten in der Mischung ist letztlich Geschmackssache und hängt vom Einzelfall ab.

Zu den Aromakomponenten mit Gärungscharakter zählen z.B. Gärungsprodukte wie 1-Propanol, 1-Butanol, iso-Butanol, 2-Butanol, iso-Pentanole und 1-Hexanol. Zu den fruchtig-blumigen und fruchtig-würzigen Aromakomponenten gehören u.a. Ester wie trans-2-cis-4-Decadiensäuremethylester, trans-2-cis-4-Decadien- säureethylester, trans-2-trans-4-Decadiensäuremethylester, trans-2-trans-4-Decadiensäureethylester, n-Butylacetat, Isopentylacetat, Hexylacetat, cis-3-Hexenbutyrat, Ethyl-2-methylbutyrat, Zimtsäuremethylester, Benoesäureethylester, Essigsäurebenzylester, Cinnamylacetat sowie Benzaldehyd, $\gamma$-Decalacton, $\alpha$-Terpineol, Limonen, Linalool, cis-3-Hexenol, p-Cymol, Isoeugenol, 2-Phenylcrotonaldehyd und Benzylbenozat. Als Aromakomponenten mit Gärungscharakter können auch aromatische Weine, z.B. sogenannte Likörweine wie Marsala, Malaga oder Samos verwendet werden.

Das erfindungsgemäße Getränk kann neben den genannten Bestandteilen weitere Zutaten enthalten, wie beispielsweise Zusätze zur Viskositätsbeeinflussung, wie Guarkernmehl, Johannisbrotkernmehl und Xanthan. Das Getränk kann wasserhell oder gefärbt sein, wobei zur Erzielung des gewünschten Farbtons und der gewünschten Farbintensität beispielsweise ein oder mehrere Lebensmittelfarbstoffe, wie beispielsweise Cochenillerot, Brillantschwarz oder Zuckercouleur, verwendet werden können. Das Getränk kann darüber hinaus mit Wasser auf den gewünschten Alkoholgehalt verdünnt sein.

Das erfindungsgemäße Getränk enthält jedoch keine Zusätze von säuerlich schmeckenden Zutaten, wie Fruchtsäfte oder Fruchtsäuren, da diese das ausgewogene Verhältnis von Alkohol- und Zuckergehalt sowie den Aromakomponenten stören können.

Ein weiterer Gegenstand der vorliegenden Erfindung ist ein Verfahren zu Herstellung eines vorstehend beschriebenen alkoholischen Getränks, wobei die fruchtig-blumigen und/oder fruchtig-würzigen Aromakomponenten in der alkoholischen Komponente gelöst und anschließend die restlichen Bestandteile zugegeben werden, wobei das Getränk gegebenenfalls mit Wasser verdünnt und falls gewünscht, filtriert wird. Anschließend kann das Getränk beispielsweise in Flaschen abgefüllt und verschlossen werden.

In einer bevorzugten Ausführungsform des Verfahrens werden die fruchtig-blumigen und/oder fruchtig-würzigen Aromakomponenten in einem Teil der alkoholischen Komponente gelöst und im Anschluß daran nacheinander eine Teilmenge des Wassers, die restliche alkoholische Komponente, Zuckersirup und die Restmenge Wasser hinzugefügt. Bevorzugt wird die rezepturgemäße Aromakomposition entweder in dem Getreidedestillat und/oder Getreidebrand oder gegebenenfalls in Neutralalkohol gelöst. Falls keine Zugabe von Getreidedestillat, Getreidebrand oder Neutralalkohol erfolgt, kann die Aromakomposition in einer Teilmenge des sonstigen Destillats und/oder Brands vorgelöst werden. Eventuelle weitere Zutaten wie z.B. Farbstoffe, werden vorzugsweise in der Restmenge Wasser gelöst und mit dieser zum Schluß zugefügt. Anschließend wird bis zur vollständigen Homogenität gerührt.

In Abhängigkeit von der eingesetzten alkoholischen Komponente kann es vorteilhaft sein, diese im ersten Schritt einer Stabilisierung wie beispielsweise einer Kältestabilisierung zu unterziehen, um spätere Nachtrübungen im Fertigprodukt zu vermeiden.

Die nachfolgenden Beispiele sollen die Erfindung näher erläutern.

**Beispiele 1-14**

Erfindungsgemäße Getränke einer in der nachfolgenden Tabelle 1 angegebenen Zusammensetzung wurden dadurch hergestellt, daß die Destillate, die z.B. einen Alkoholgehalt von ca. 60% aufwiesen, vor der Weiterverarbeitung durch Zugabe von Wasser auf einen Alkoholgehalt von ca. 40% vol herabgesetzt wurden. Zunächst wurde dann die rezepturgemäße Aromakomposition entweder in dem Getreidedestillat und/oder Getreidekorn oder gegebenenfalls in Neutralalkohol vorgelöst. Falls keine Zugabe von Getreidedestillat, Getreidebrand oder Neutralalkohol erfolgte, wurde die Aromakomposition in einer Teilmenge des sonstigen Destillats und/oder Brandes vorgelöst. Im Anschluß wurden nacheinander eine Teilmenge Wasser, die restliche alkoholische Komponente, Zuckersirup und die Restmenge Wasser hinzugefügt. Eventuelle weitere Zutaten wie z.B. Farbstoffe, wurden in der Restmenge Wasser gelöst und zum Schluß zugefügt. Die Mischung wurde dann bis zur vollständigen Homogenität gerührt, filtriert und anschließend in Flaschen abgefüllt und verschlossen.

In bestimmten Fällen, insbesondere bei der Verwendung von Williamschrist-Birnendestillat oder -brand wurde im ersten Schritt eine Kältestabilisierung vorgenommen, um spätere Nachtrübungen im Fertigprodukt zu vermeiden.

Es wurden Getränke folgender Zusammensetzung hergestellt;, wobei es sich bei Beispiel 5 um ein Referenzbeispiel handelt.

| Beispiel | Alkoholische Bestandteile (Angaben in % bezogen auf den Alkoholgehalt im Fertigprodukt) | Weitere Zutaten | Alkoholgehalt im Fertigprodukt % vol | Zuckergehalt im Fertigprodukt g/l |
|---|---|---|---|---|
| 1 | Kirschbrand 60% Roggenfeindestillat 40% | Zuckersirup, Aromakomposition "Kirsche", Wasser | 30 | 35 |
| 2 | Williamschrist-Birnendestillat 55% Neutralalkohol 45% | Zuckersirup, Aromakomposition "Birne", Wasser | 30 | 40 |
| 3 | Williamschrist-Birnenbrand 60% Roggenbrand 40% | Zuckersirup, Aromakomposition "Birne", Wasser | 30 | 40 |
| 4 | Aprikosenbrand 52% Roggenfeindestillat 48% | Zuckersirup, Aromakomposition "Aprikose", Wasser | 28 | 43 |
| 5 | Weindestillat gelagert 100% | Zuckersirup, Karamelsirup, Aromakomposition "Brandy", Wasser | 36 | 36 |

(fortgesetzt)

| Beispiel | Alkoholische Bestandteile (Angaben in % bezogen auf den Alkoholgehalt im Fertigprodukt) | Weitere Zutaten | Alkoholgehalt im Fertigprodukt % vol | Zuckergehalt im Fertigprodukt g/l |
|---|---|---|---|---|
| 6 | Rotweindestillat gelagert 100% | Zuckersirup, Aromakomposition "Rotwein", Lebensmittelfarbstoffe Cochenillerot, Brillantschwarz, Wasser | 30 | 39 |
| 7 | Weißweindestillat 40% Wodka 60% | Zucker, Aromakomposition "Weißwein", Wasser | 26 | 31 |
| 8 | Apfelbrand 65% Weizenfeindestillat 35% | Zuckersirup, Aromakomposition "Apfel", Wasser | 32 | 40 |
| 9 | Zwetschenbrand 60% Roggenkorn 40% | Zuckersirup, Aromakomposition "Zwetsche", Wasser | 30 | 40 |
| 10 | Himbeergeist 65% Kornbrand 35% | Zuckersirup, Aromakomposition "Himbeere", Wasser | 30 | 39 |
| 11 | Traubenbrand aus roten Weintrauben 100% | Zuckersirup, Karamelsirup, Aromakomposition "rote Traube", Wasser | 30 | 35 |
| 12 | Traubenbrand aus roten Weintrauben 100% | Zuckersirup, Marsala, Aromakomposition "rote Traube", Wasser | 30 | 35 |
| 13 | Pfirsichbrand 60% Kornbrand 40% | Zuckersirup, Aromakomposition "Pfirsich", Wasser | 32 | 40 |
| 14 | Traubenbrand aus weißen Weintrauben 56% Neutralalkohol 44% | Zuckersirup, Karamelsirup, Aromakomposition "Traube", Wasser | 30 | 38 |

## Patentansprüche

1. Alkoholisches Getränk, umfassend mindestens eine alkoholische Komponente, Zucker und Aromakomponenten, **dadurch gekennzeichnet, daß** der Alkoholgehalt im Bereich von 25-32% vol und der Zuckergehalt im Bereich von 25-60 g/l jeweils bezogen auf das gesamte alkoholische Getränk liegt, die Aromakomponenten eine Mischung von Aromakomponenten mit Gärungscharakter und fruchtig-blumigen und/oder fruchtig-würzigen Aromakomponenten umfassen und das Getränk keine säuerlich schmeckenden Zutaten umfaßt.

2. Alkoholisches Getränk nach Anspruch 1, **dadurch gekennzeichnet, daß** der Alkoholgehalt im Bereich von 26-32% vol und bevorzugt im Bereich von 28-32% vol liegt.

3. Alkoholisches Getränk nach einem der vorhergehenden Ansprüche, **dadurch gekennzeichnet, daß** der Zuckergehalt im Bereich von 30-50 g/l und bevorzugt im Bereich von 30-45 g/l liegt.

4. Alkoholisches Getränk nach Anspruch 1, **dadurch gekennzeichnet, daß** der Zuckergehalt in g/l bei vorgegebenem Alkoholgehalt in % vol größer oder gleich einem Wert H1 und kleiner oder gleich einem Wert H2 ist, wobei sich H1 und H2 nach den folgenden Formeln berechnen:

$$H1 = 111,5 - 3,14 * \text{Alkoholgehalt}$$

$$H2 = 147,1 - 2,88 * \text{Alkoholgehalt}.$$

5. Alkoholisches Getränk nach einem der vorhergehenden Ansprüche, **dadurch gekennzeichnet, daß** die alkoholische Komponente ein oder mehrere Destillate und/oder Brände umfaßt.

6. Alkoholisches Getränk nach Anspruch 5, **dadurch gekennzeichnet, daß** die alkoholische Komponente ausgewählt ist aus der Gruppe bestehend aus Destillaten und/oder Bränden aus Kernobst, Steinobst, Beerenobst, Weißwein, Rotwein, Fruchtwein, Getreide und Kartoffeln.

7. Alkoholisches Getränk nach Anspruch 5 oder 6, **dadurch gekennzeichnet, daß** die alkoholische Komponente ein gelagertes Destillat und/oder gelagerter Brand ist.

8. Alkoholisches Getränk nach einem der Ansprüche 5-7, **dadurch gekennzeichnet, daß** mindestens 25% des Gesamtalkoholgehalts des Getränks aus dem verwendeten Destillat und/oder Brand stammen.

9. Alkoholisches Getränk nach einem der Ansprüche 5-8, **dadurch gekennzeichnet, daß** das Getränk eine Mischung aus einem Destillat und/oder Brand aus Kern- oder Steinobst bzw. Wein und einem Getreidedestillat/-brand oder Neutralalkohol umfaßt.

10. Alkoholisches Getränk nach einem der vorhergehenden Ansprüche, **dadurch gekennzeichnet, daß** die Aromakomponenten eine Mischung aus natürlichen Aromastoffen umfassen.

11. Alkoholisches Getränk nach einem der vorhergehenden Ansprüche, **dadurch gekennzeichnet, daß** die Aromakomponenten mit Gärungscharakter Destillat- und/oder Brandaromakomponenten sind und die fruchtig-blumigen und/oder fruchtig-würzigen Aromakomponenten natürliche Aromakomponenten pflanzlicher Herkunft sind.

12. Verfahren zur Herstellung eines alkoholischen Getränks nach einem der Ansprüche 1-11, **dadurch gekennzeichnet, daß** die fruchtig-blumigen und/oder fruchtig-würzigen Aromakomponenten in der alkoholischen Komponente gelöst werden und anschließend die restlichen Bestandteile zugegeben werden, wobei das Getränk gegebenenfalls mit Wasser verdünnt und falls gewünscht, filtriert wird.

13. Verfahren nach Anspruch 12, **dadurch gekennzeichnet, daß** die fruchtig-blumigen und/oder fruchtig-würzigen Aromakomponenten in einem Teil der alkoholischen Komponente, vorzugsweise in dem Getreidedestillat/-brand oder Neutralalkohol gelöst werden und im Anschluß nacheinander eine Teilmenge Wasser, die restliche alkoholische Komponente, Zuckersirup und die Restmenge Wasser hinzugefügt werden.

**Claims**

1. Alcoholic beverage, comprising at least one alcoholic component, sugar and flavoring components, **characterized in that** the alcohol content ranges from 25 to 32 % by volume and the sugar content ranges from 25 to 60 g/l, each based on the entire alcoholic beverage, the flavoring components comprise a mixture of flavoring components having a fermentation character and fruity and flowery and/or fruity and spicy flavoring components and the beverage does not comprise sour-tasting ingredients.

2. Alcoholic beverage according to claim 1, **characterized in that** the alcohol content ranges from 26 to 32 % by volume and preferably from 28 to 32 % by volume.

3. Alcoholic beverage according to any of the preceding claims, **characterized in that** the sugar content ranges from 30 to 50 g/l and preferably from 30 to 45 g/l.

4. Alcoholic beverage according to claim 1, **characterized in that** with given alcohol content in % by volume the sugar content in g/l is higher than or equal to a value H1 and lower than or equal to a value H2, wherein H1 and H2 are calculated according to the following formulae:

$$H1 \quad = \quad 111.5 - 3.14 \ * \ \text{alcohol content}$$

$$H2 \quad = \quad 147.1 - 2.88 \ * \ \text{alcohol content}.$$

5. Alcoholic beverage according to any of the preceding claims, **characterized in that** the alcoholic component comprises one or several distillates and/or brandies.

6. Alcoholic beverage according to claim 5, **characterized in that** the alcoholic component is selected from the group consisting of distillates and/or brandies made of pipfruit, stone fruit, soft fruit, white wine, red wine, fruit wine, corn and potatoes.

7. Alcoholic beverage according to claim 5 or 6, **characterized in that** the alcoholic component is a stored distillate and/or stored brandy.

8. Alcoholic beverage according to any of claims 5 to 7, **characterized in that** at least 25 % of the total alcohol content of the beverage originate from the employed distillate and/or brandy.

9. Alcoholic beverage according to any of claims 5 to 8, **characterized in that** the beverage comprises a mixture of a distillate and/or brandy of pipfruit or stone fruit, alternatively wine and a corn distillate/brandy or neutral alcohol.

10. Alcoholic beverage according to any of the preceding claims, **characterized in that** the flavoring components comprise a mixture of natural flavoring substances.

11. Alcoholic beverage according to any of the preceding claims, **characterized in that** the flavoring components having a fermentation character are distillate and/or brandy flavoring components and the fruity and flowery and/or fruity and spicy flavoring components are natural flavoring components of vegetable origin.

12. A method of producing an alcoholic beverage according to any of claims 1 to 11, **characterized in that** the fruity and flowery and/or fruity and spicy flavoring components are dissolved in the alcoholic component and then the remaining constituents are added, the beverage optionally being diluted with water and filtered, where desired.

13. The method according to claim 12, **characterized in that** the fruity and flowery and/or fruity and spicy flavoring components are dissolved in part of the alcoholic component, preferably in the corn distillate/brandy or neutral alcohol followed by the successive addition of a subset of water, the remaining alcoholic component, sugar syrup and the residual amount of water.

**Revendications**

1. Boisson alcoolisée comprenant au moins un composant alcoolique, du sucre et des composants aromatiques, **caractérisée en ce que** la teneur en alcool se trouve dans la plage de 25% à 32% en volume et la teneur en sucre se trouve dans la plage de 25 g/l à 60 g/1, respectivement par rapport à la totalité de la boisson alcoolisée, **en ce que** les composants aromatiques comprennent un mélange de composants aromatiques avec un caractère fermentescible et des composants aromatiques fruités-fleuris et/ou fruités-épicés et **en ce que** la boisson ne contient aucun ingrédient au goût acide.

**2.** Boisson alcoolisée selon la revendication 1, **caractérisée en ce que** la teneur en alcool se trouve dans la plage de 26% à 32% en volume et, de préférence, dans la plage de 28% à 32% en volume.

**3.** Boisson alcoolisée selon l'une quelconque des revendications précédentes, **caractérisée en ce que** la teneur en sucre se trouve dans la plage de 30 g/l à 50 g/l et de préférence dans la plage de 30 g/l à 45 g/l.

**4.** Boisson alcoolisée selon la revendication 1, **caractérisée en ce que** la teneur en sucre en g/l pour une teneur en alcool en % en volume donnée est supérieure ou égale à une valeur H1 et inférieure ou égale à une valeur H2, H1 et H2 étant calculées selon les formules suivantes :

```
H1 = 111,5 - 3,14 * teneur en alcool


H2 = 147,1 - 2,88 * teneur en alcool.
```

**5.** Boisson alcoolisée selon l'une quelconque des revendications précédentes, **caractérisée en ce que** le composant alcoolique comprend un ou plusieurs distillats et/ou eaux-de-vie.

**6.** Boisson alcoolisée selon la revendication 5, **caractérisée en ce que** le composant alcoolique est choisi dans le groupe formé par les distillats et/ou les eaux-de-vie de fruits à pépins, de fruits à noyaux, de baies, de vin blanc, de vin rouge, de vin de fruit, de céréales et de pommes de terre.

**7.** Boisson alcoolisée selon la revendication 5 ou 6, **caractérisée en ce que** le composant alcoolique est un distillat vieilli et/ou une eau-de-vie vieillie.

**8.** Boisson alcoolisée selon l'une quelconque des revendications 5 à 7, **caractérisée en ce qu'**au moins 25% de la teneur totale en alcool de la boisson proviennent du distillat et/ou de l'eau-de-vie utilisé(e).

**9.** Boisson alcoolisée selon l'une quelconque des revendications 5 à 8, **caractérisée en ce que** la boisson comprend un mélange composé d'un distillat et/ou d'une eau-de-vie de fruits à pépins ou à noyaux ou bien de vin et d'un distillat de céréales/d'une eau-de-vie de céréales ou d'alcool neutre.

**10.** Boisson alcoolisée selon l'une quelconque des revendications précédentes, **caractérisée en ce que** les composants aromatiques comprennent un mélange d'arômes naturels.

**11.** Boisson alcoolisée selon l'une quelconque des revendications précédentes, **caractérisée en ce que** les composants aromatiques avec un caractère fermentescible sont des composants aromatiques de distillat et/ou d'eau-de-vie et **en ce que** les composants aromatiques fruités-fleuris et/ou fruités-épicés sont des composants aromatiques naturels d'origine végétale.

**12.** Procédé pour la fabrication d'une boisson alcoolisée selon l'une quelconque des revendications 1 à 11, **caractérisé en ce que** les composants aromatiques fruités-fleuris et/ou fruités-épicés sont dissous dans le composant alcoolique puis les composants restants sont ajoutés, la boisson pouvant éventuellement être diluée dans de l'eau et, si souhaité, être filtrée.

**13.** Procédé selon la revendication 12, **caractérisé en ce que** les composants aromatiques fruités-fleuris et/ou fruités-épicés sont dissous dans une partie du composant alcoolique, de préférence dans le distillat de céréales/l'eau-de-vie de céréales ou l'alcool neutre et **en ce que**, immédiatement après, une partie de l'eau, le reste du composant alcoolique, du sirop de sucre et le reste de l'eau sont ajoutés les uns après les autres.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4230391 C1
- DE 4331437 A1
- DE 4410755 A1
- DE 19619370 A1
- DE 19650018 A1
- DE 19729030 A1
- EP 0807680 A